# EUROPEAN PATENT APPLICATION

(11) **EP 4 683 200 A1**
(43) Date of publication of application: **21.01.2026**
(21) Application number: 24189160.5
(22) Date of filing: 17.07.2024
(51) Int. Cl.: H02M 3/00, H02M 3/335, H02M 7/487

(54) **ISOLATED DC/DC POWER CONVERTER**

(71) Applicant: Siemens Aktiengesellschaft, 80333 München (DE)
(72) Inventor: Mondal, Gopal, 91058 Erlangen (DE); Nielebock, Sebastian, 91301 Forchheim (DE)
(74) Representative: Siemens Patent Attorneys

(57) **Abstract**

An isolated DC/DC power converter arranged for power conversion between prima-ry side DC terminals and secondary side DC terminals, comprising:
- two half-bridges of two semiconductor switches each, the half-bridges being ar-ranged in a parallel connection, being connected at an upper and a lower node, forming a full bridge,
- a transformer, its primary side being connected to the midpoints of the two half-bridges,
- a rectifier circuit connected to the secondary side of the transformer,
- a circuit arrangement connected to the upper and lower node, configured to pro-vide a third voltage level between the upper and lower node,
- an upper second semiconductor switch between the upper primary side DC termi-nal and the upper node,
- a lower second semiconductor switch between the lower primary side DC terminal and the lower node,
- a control circuit configured to operate the semiconductor switches, wherein the controller is configured to use a first operation mode and a second operating mode, wherein in the first operating mode the upper and lower second switches remain turned on, wherein in the second operating mode, one of the second switches re-mains turned on while the other second switch remains turned off.

## Description

Isolated DC/DC converters are electronic devices that provide electrical isolation between the input and output circuits while converting the input voltage to a differ-ent output voltage level. They may be bidirectional, removing the distinction be-tween input and output voltage. They are widely used in various applications such as power supplies for electronic devices, renewable energy systems, electric vehi-cles, and industrial automation.

These converters typically consist of an input stage, isolation stage, and output stage. The input stage converts the input voltage to an AC voltage, which is then transferred through the isolation stage using a transformer. The output stage then rectifies and possibly filters the received AC voltage to provide the desired output voltage.

It is established that the best efficiency of a DC/DC converter is achieved when the ration of the input and output voltages correspond to the turn ratio of the trans-former. Thus, the turn ratio of isolated DC/DC converters is typically chosen to fit the operating voltages that the converter will be operating at most of the time. How-ever, any deviation from this ideal voltage ratio reduces its efficiency.

To deal with varying input and output voltages, DC/DC converters may be con-structed with a separate voltage variation stage, e.g. a buck/boost or PFC, thus in-creasing the complexity of the converter.

It is an object of the present invention to provide an isolated DC/DC power converter that has an improved tolerance of a varying ratio of the input and output voltages.

A solution is provided by the DC/DC converter according to claim 1.

The isolated DC/DC power converter according to the invention is arranged for power conversion between primary side DC terminals and secondary side DC ter-minals.

It comprises two half-bridges of two or more semiconductor switches each. The half-bridges are arranged in a parallel connection and connected at an upper and a lower node, thus forming a full bridge.

It further comprises a transformer. The primary side of the transformer is connect-ed to the midpoints of the two half-bridges, while a rectifier circuit is connected to the secondary side of the transformer.

The power converter also comprises a circuit arrangement connected to the upper and lower node, configured to provide a third voltage level between the upper and lower node.

The power converter comprises a control circuit configured to operate the semicon-ductor switches. The controller is configured to use a first operation mode and a second operating mode. In the first operating mode, the upper and lower second switches remain turned on. In the second operating mode, one of the second switches remains turned on while the other second switch remains turned off.

Advantageously, this allows the power converter to work with two different effective input voltages. In the first operating mode, the input voltage VDC at the primary side DC terminals is directly applied to the upper and lower node and thus the full bridge. The full bridge then operates as it would in a common DC/DC converter, e.g. an LLC-type converter, working with VDC.

In the second operating mode, exactly one of the two second switches is turned on while the other remains turned off. This, together with the diodes of the diode series leads to half the input voltage VDC/2 being applied to the full bridge. The full bridge then operates as it would in a common DC/DC converter, however in this operating mode working with VDC/2 as the primary side voltage.

Thus, the present converter can achieve an optimal efficiency at two ratios of out-put over input voltage rather than at only one. As a result, the efficiency for a whole range of voltage ratios is higher than it is for a common DC/DC converter (any ratio that is closer to 2▪VO/VDC than to VO/VDC).

Further features that may be added alone or together in exemplary embodiments of the invention include:
The circuit arrangement may comprise a capacitor series of two capacitors ar-ranged between the primary side DC terminals, an upper second semiconductor switch between the upper primary side DC terminal and the upper node and a lower second semiconductor switch between the lower primary side DC terminal and the lower node. It also comprises a diode series of two diodes connected between the upper and lower node, wherein the midpoint of the diode series is connected to the midpoint of the capacitor series. In this way, a circuit which is similar to a three-level NPC converter is formed.

Alternatively, the circuit arrangement may comprise a capacitor connected between the upper and lower node. In this way, a circuit which is similar to a flying capacitor three-level converter is formed.

The DC/DC power converter may be configured to operate the semiconductor switches of the full bridge to convert a DC voltage at the upper and lower node to an AC voltage at the primary side of the transformer and to operate at a first switching frequency of at least 1 kHz. Typical values for the switching frequency are 10 kHz, 16 kHz or 28 kHz. The switching frequency may also change during operation.

The DC/DC power converter may be configured to use the first and/or second oper-ating mode for length of time that is substantially longer than a switching period of the full bridge semiconductor switches. That length of time may be at least 0.1 sec-onds, or at least 1 s or at least 10 s.

The power converter may be configured to, in the second operating mode, switching the state of the second switches with a second switching frequency substantially lower than the first switching frequency, particularly less than 1 kHz or in other em-bodiments less than 100 Hz. This means that the upper second switch and the low-er second switch are alternatingly turned on while the respective other switch is turned off. In this way, the capacitors of the capacitor series can be kept in a bal-anced state of each having a voltage of VDC/2. The control circuit may be config-ured to measure the voltage, e.g. at the point between the capacitors to determine switching times for the second switches.

The rectifier circuit may be a diode bridge. This simplifies the setup of the DC/DC converter but makes it unidirectional. In this case the primary side DC terminals form input terminals and the secondary side DC terminals form output terminals of the DC/DC converter.

Alternatively, the rectifier circuit may be an active rectifier. With an active rectifier circuit, for example a secondary side full-bridge circuit with semiconductor switch-es, the DC/DC converter is a bi-directional converter. In this case there is no distinc-tion between the primary side DC terminals and the secondary side DC terminals as both can be input and output terminals.

Beyond that, the DC/DC converter may comprise a setup on the secondary side that is substantially the same as the setup of the primary side instead of using a diode bridge rectifier. The secondary side full bridge having a secondary upper and lower node, it may comprise a capacitor series of two capacitors arranged between the secondary side DC terminals, an upper second semiconductor switch between the upper secondary side DC terminal and the upper secondary node and a lower sec-ond semiconductor switch between the lower secondary side DC terminal and the lower secondary node. It also comprises a diode series of two diodes connected between the upper and lower secondary node, wherein the midpoint of the diode series is connected to the midpoint of the capacitor series. In this way, a circuit which is similar to a three-level NPC converter is formed on the secondary side.

The control circuit is then advantageously configured to operate the semiconductor switches on the secondary side in the same way as the primary side switches, us-ing the first and second operating modes. This allows the converter to achieve a high efficiency at another voltage ratio between output and input voltages, thus also increasing the voltage range with good efficiency values.

In another embodiment, the capacitor series comprises three capacitors with an upper midpoint between the upper two capacitors and a lower midpoint between the lower two capacitors. An upper third semiconductor switch is connected between the upper node and the upper midpoint and a lower third semiconductor switch is connected between the lower node and the lower midpoint. In this way a higher number of levels is enabled for use in the power conversion, allowing for another point of optimum efficiency.

A further increase of levels is reached when the capacitor series comprises four capacitors with an upper midpoint between the upper two capacitors and a lower midpoint between the lower two capacitors and a midpoint between the central ca-pacitors. In this embodiment, an upper fourth half-bridge of two semiconductor switches is connected between the upper DC terminal and the upper midpoint, the midpoint of the upper fourth half-bridge being connected to a terminal of the upper second switch, a lower fourth half-bridge of two semiconductor switches is con-nected between the lower DC terminal and the lower midpoint, the midpoint of the lower fourth half-bridge being connected to a terminal of the lower second switch, and a diode series of two diodes is connected between the upper and lower node, wherein the midpoint of the diode series is connected to the midpoint of the capaci-tor series.

It is to be understood that in some embodiments the elements described as "semi-conductor switches" of the power converter are individual semiconductor elements, i.e. single switches each. In other embodiments some or each of the elements de-scribed as "semiconductor switches" of the power converter are multiple switches arranged in a parallel or serial connection and acting together as if they were a sin-gle switch of enhanced voltage rating or current capability. The number of switch-ing elements as defined by their function in the power converter remains un-changed.

Embodiments of the present invention are now described with reference to the ac-companying drawings to which the invention is not limited. The illustrations of the drawings are in schematic form. It is noted that in different figures, similar or iden-tical elements use the same reference signs.
Fig. 1 illustrates a first embodiment of an LLC type DC/DC converter,
Figs. 2 to 6 illustrate further embodiments of a DC/DC converter.

The DC/DC converter 10 of the first embodiment of the invention comprises upper and lower primary side DC terminals 12, 13. A capacitor series of an upper and lower capacitor 15, 16 is connected between the DC terminals 12, 13. A further se-ries of an upper second semiconductor switch S2, a semiconductor full bridge 30 and a lower second semiconductor switch S5 is also connected between the DC terminals 12, 13.

The semiconductor full bridge 30 comprises a first to fourth semiconductor switch 31... 34, arranged in typical fashion as two parallel half-bridges of two switches each. The upper terminals of the two upper switches S2, S5 of the full bridge form an upper node 36 to which the upper second semiconductor switch S1 is connected. The lower terminals of the two lower switches S3, S6 of the full bridge form a lower node 37 to which the lower second semiconductor switch S4 is connected. Mid-points 38, 39 are located between the switches of the half-bridges.

In the present example the semiconductor switches S1...S6 are IGBTs but in other embodiments different types of switches may be used such as MOSFETs. The switches of the full bridge 30 must be rated for a voltage of at least the input volt-age VDC at the DC terminals 12, 13.

Also arranged in a parallel connection to the full bridge 30 is a diode series of two diodes 41, 42. The midpoint 43 of the diode series is connected to the midpoint 17 of the capacitor series.

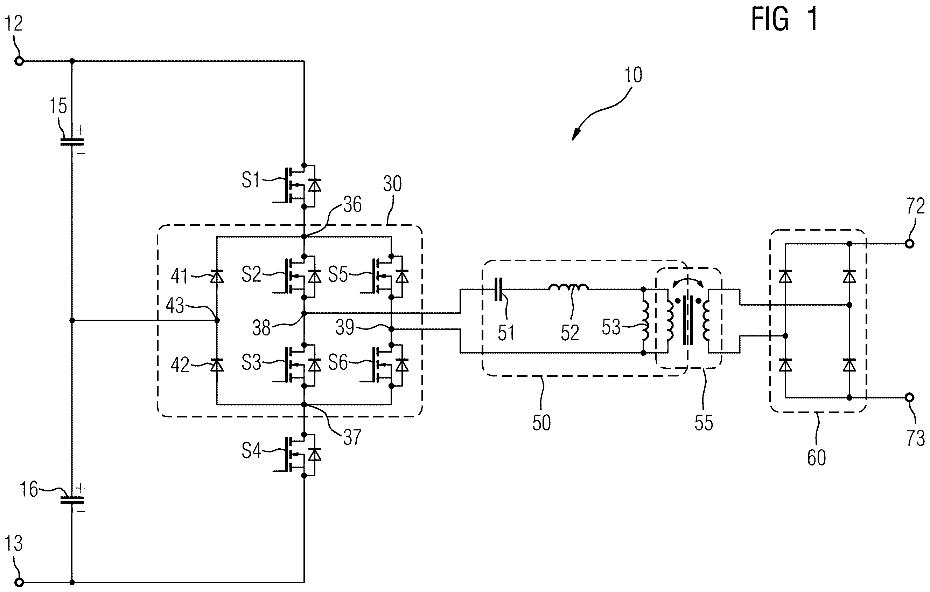

The midpoints 38, 39 are connected to a network 50 comprising the primary coil of transformer 55. The network also comprises a capacitor 51 and a series and paral-lel inductor 52, 53. While at least the primary coil of transformer 55 is formed by a physical coil, the other parts of network 50 may partly or fully be formed from stray capacitance and/or stray inductance values of the transformer 55 and surrounding connection lines and thus not be distinct physical devices as drawn in figure 1.

With the elements of the network 50 shown in figure 1, the DC/DC converter 10 is preferentially operated as an LLC type converter. The principles of operating as an LLC type converter are known in the art and the following description focuses on aspects that extend beyond those principles. While an LLC converter is a resonant converter, embodiments of the present invention need not be LLC type converters nor do they need to be resonant converters.

The secondary coil of transformer 55 is connected to the midpoints of a diode bridge rectifier 60. The upper and lower terminals of the diode rectifier form the secondary side DC terminals 72, 73 of the DC/DC converter 10. The DC/DC convert-er 10 of figure 1 is, through the use of diode rectifier 60, a unidirectional converter. Thus, the primary side DC terminals 12, 13 form input terminals while the second-ary side DC terminals 72, 73 form output terminals. Other embodiments of the in-vention may use an active rectifier, e.g. in the form of a semiconductor switch full bridge instead of the diode rectifier 60 to form a bidirectional DC/DC converter where the DC terminals 12, 13, 72, 73 have no distinction as input or output termi-nals. In the following text, the secondary side voltage will be called output voltage VO.

Based on the ratio of the primary side voltage VDC and the output voltage VO the DC/DC converter uses one of two operating modes. The operating modes are based on the following table of voltages VAB between the midpoints 38, 39 of the half-bridges in the full bridge 30. The operating modes are enacted by a control unit of the converter 10 that is not shown in figure 1. The control unit controls the switches S1...S6.

**Table 1: Switching states for different operating conditions.**

| VAB | S1 | S2 | S3 | S4 | S5 | S6 | |
|---|---|---|---|---|---|---|---|
| VDC | 1 | 1 | 0 | 1 | 0 | 1 | |
| VDC/2 | 1 | 1 | 0 | 0 | 0 | 1 | |
| VDC/2 | 0 | 1 | 0 | 1 | 0 | 1 | |
| 0 | X | 1 | 0 | X | 1 | 0 | |
| 0 | X | 0 | 1 | X | 0 | 1 | |
| -VDC/2 | | 0 | 0 | 1 | 1 | 1 | 0 |
| -VDC/2 | | 1 | 0 | 1 | 0 | 1 | 0 |
| -VDC | 1 | 0 | 1 | 1 | 1 | 0 | |

In a first operating mode, the second switches S1, S4 remain closed (switched on) for as long as the first operating mode is used and the converter itself is active. Thus, the full input voltage VDC is continually present at the upper and lower nodes 36, 37 of the full bridge 30. The full bridge itself operates as it would in an LLC DC/DC converter known from the prior art, using the switching states for VDC and -VDC in table 1 to create an AC voltage at the network 50.

In the second operating mode, the second switches S1, S4 are operated such that exactly one of them is closed (switched on) and the other one is opened (switched off). Thus, the voltage of one of the capacitors 15, 16 is applied to either the upper or lower node 36, 37 and the total voltage across the full bridge 30 is VDC/2. The full bridge again operates as it would in an LLC DC/DC converter known from the prior art, but is now using the switching states for VDC/2 and - VDC/2 in table 1 to create an AC voltage at the network 50.

Table 1 shows two switching states for each of VDC/2 and -VDC/2. These are differ-entiated by which of the two second switches S1/S4 is closed and which is open. This degree of freedom is used to balance the charge of capacitors 15, 16 to keep them at a voltage of VDC/2 each. To this end, the second switches S1, S4 are switched with a comparatively low frequency of less than 1 kHz, i.e. considerably slower than those of the full bridge 30. The actual switching speed of the second switches S1, S4 depends on the switching frequency of the full bridge 30 and the capacitance values of capacitors 15, 16.

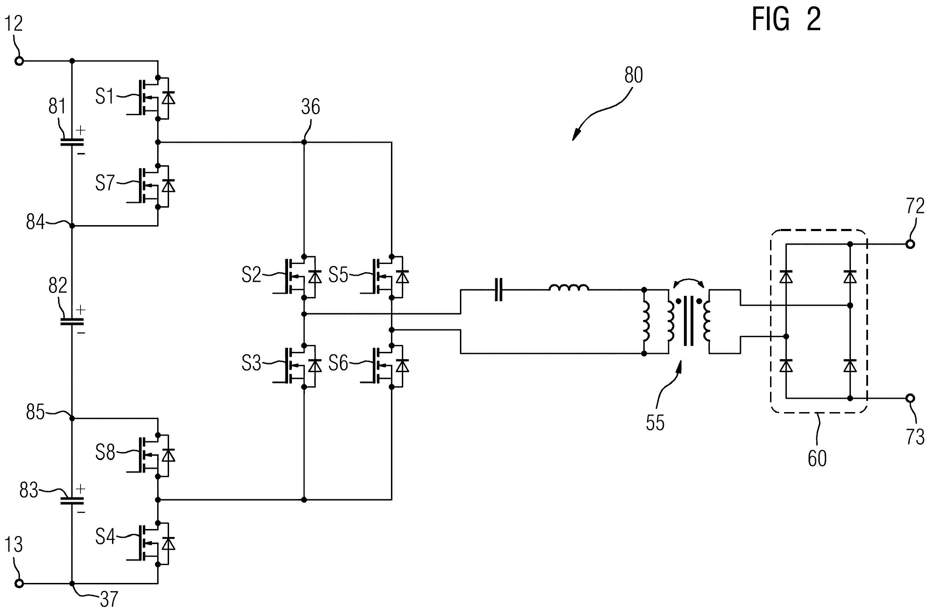

Figure 2 shows a further embodiment of the invention. DC/DC converter 80 is formed similarly to DC/DC converter 10 of figure 1 but comprises some additional elements. The capacitor series of DC/DC converter 80 comprises an upper, middle and lower capacitor 81...83. The capacitor series has an upper and a lower midpoint 84, 85 between those capacitors. The upper midpoint 84 is connected across a semiconductor switch S7 to the upper node 36. The lower midpoint 85 is connected across a semiconductor switch S8 to the lower node 37. Compared to the DC/DC converter 10 of figure 1, this DC/DC converter 80 is able to use more levels on the primary side to achieve a good efficiency across an even wider range of output voltages VO.

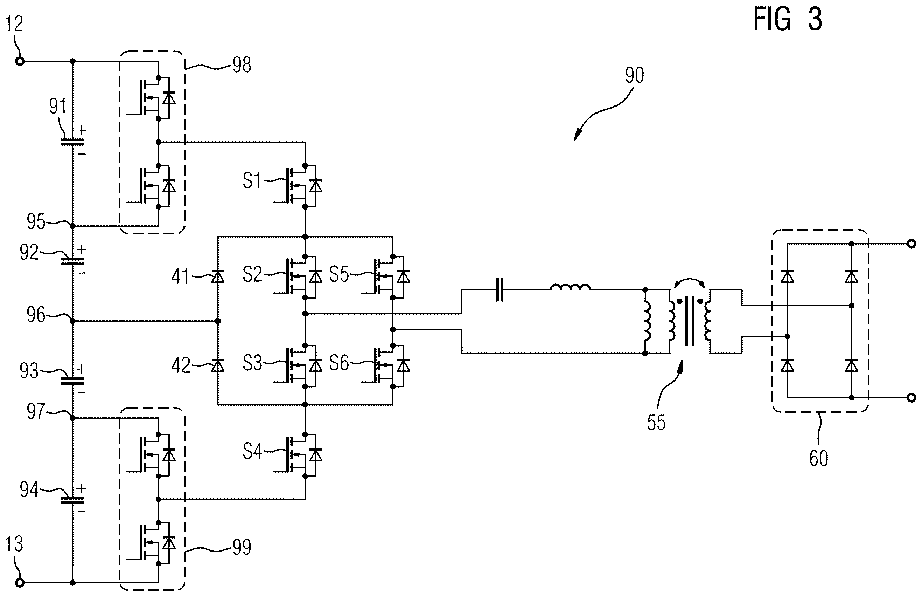

Figure 3 shows another embodiment of the invention. The DC/DC converter 90 of figure 3 is also based on the DC/DC converter 10 of figure 1 but comprises some additional elements. The capacitor series of DC/DC converter 90 comprises four capacitors 91... 94 and thus has an upper, middle and lower midpoint 95...97 be-tween those capacitors. In DC/DC converter 90 the second switches S1, S4 are no longer directly connected to the primary side DC terminals 12, 13. Instead, they are connected to the midpoints of an upper and to a lower half-bridge 98, 99, respec-tively. The upper half-bridge 98 is arranged parallel to the uppermost of the capaci-tors 91, while the lower half-bridge 99 is arranged parallel to the lowermost of the capacitors 94. Compared to the DC/DC converters 10, 80 of figures 1 and 2, this DC/DC converter 90 is able to use even more levels on the primary side to achieve a good efficiency across an even wider range of output voltages VO.

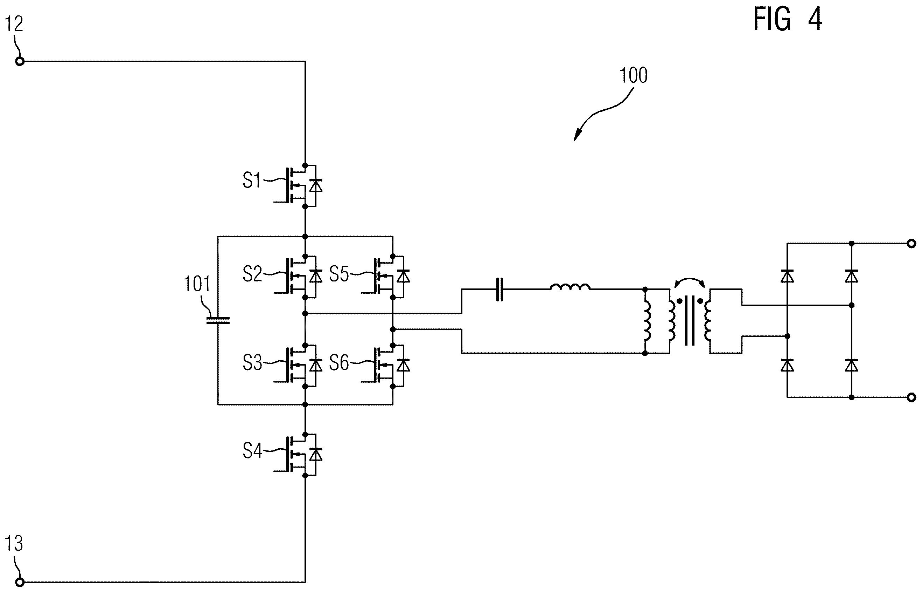

Figure 4 shows another embodiment of the invention. DC/DC converter 100 is formed similarly to DC/DC converter 10 of figure 1 with some changes. DC/DC converter 100 does not use the capacitor series of capacitors 15, 16 nor the diodes 41, 42. Instead, it comprises capacitor 101 which is connected between the upper and lower node 36, 37. This makes DC/DC converter 100 similar to a flying capaci-tor 3-level converter setup rather than an NPC setup.

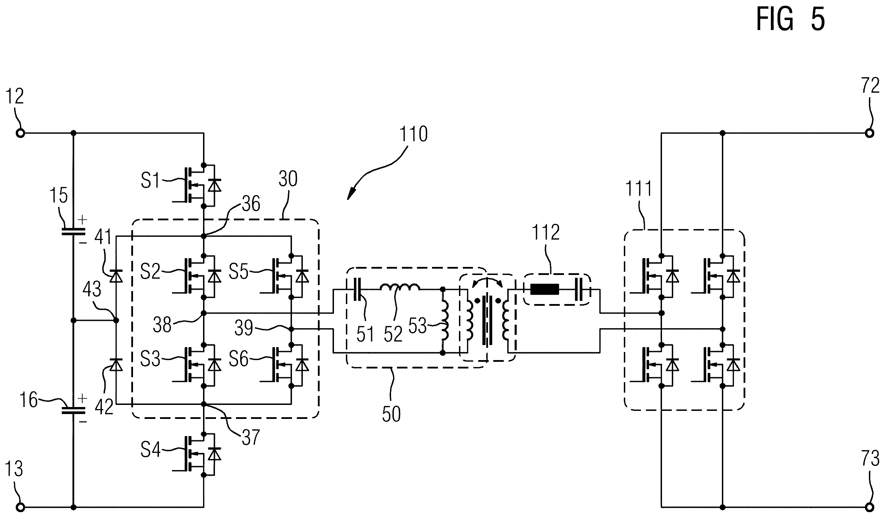

Figure 5 shows a variation on the embodiment of figure 1. Power converter 110 largely comprises the elements of the power converter 10 of figure 1. Instead of using the diode bridge rectifier 60, the secondary side of power converter 110 uses an active rectifier with a full bridge 111 of semiconductor switches. In the LLC con-verter setup, the secondary side also comprises an additional network 112 of a ca-pacitor and inductor connected between the full bridge 111 and the secondary side of the transformer 55.

The DC/DC converter 110 of figure 5 is bi-directional, i.e., it can support power flow in both directions while still being able to achieve an optimal efficiency at two ratios of output over input voltage rather than at only one.

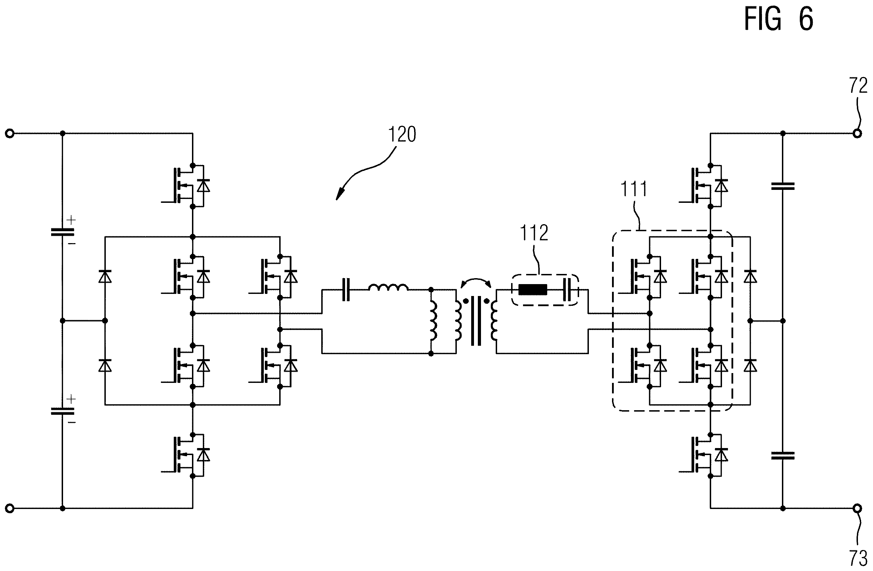

A further improvement of voltage ratio range at which a high efficiency can be achieved is possible with the DC/DC converter 120 shown in figure 6. The power converter 120 of figure 6 is largely similar to the power converter 110 of figure 5 but it uses additional switches connected to the full bridge 111, giving the power con-verter 120 substantially symmetrical primary and secondary sides.

The secondary side may operate like the primary side, i.e. switch between operating modes and therefore operate at two different voltage levels. Since the voltage on both sides can be switched between full and half the respective DC terminal voltag-es, there are now three voltage ratios of output over input voltage at which optimal efficiency is achieved, namely 2, 1 and 0.5 (multiplied by the transformer winding ratio).

### List of reference numbers

- 10, 80, 90, 100, 110, 120: DC/DC power converter
- 12, 13: primary side DC terminals
- 15, 16: upper and lower capacitor
- S1: upper second semiconductor switch
- S4: lower second semiconductor switch
- 30, 111: full bridge
- S2, S3, S5, S6: semiconductor switch
- 36: upper node
- 37: lower node
- 38, 39: half-bridge midpoints
- 41, 42: diodes
- 43: diode midpoint
- 50: network
- 55: transformer
- 51: capacitor
- 52: series inductor
- 53: parallel inductor
- 60: diode bridge rectifier
- 72, 73: secondary side DC terminals
- 81... 83, 91... 94: capacitor
- 84, 85, 95...97: midpoint
- 98, 99: half-bridge

## Claims

1. An isolated DC/DC power converter (10, 80, 90, 100) arranged for power conver-sion between primary side DC terminals (12, 13) and secondary side DC terminals (72, 73), comprising:
- two half-bridges of two semiconductor switches (S2, S3, S5, S6) each, the half-bridges being arranged in a parallel connection, being connected at an upper and a lower node (36, 37), forming a full bridge (30),
- a transformer (55), its primary side being connected to the midpoints of the two half-bridges,
- a rectifier circuit (60) connected to the secondary side of the transformer (55),
- a circuit arrangement connected to the upper and lower node (36, 37), configured to provide a third voltage level between the upper and lower node (36, 37),
- an upper second semiconductor switch (S1) between the upper primary side DC terminal (12) and the upper node (36),
- a lower second semiconductor switch (S4) between the lower primary side DC terminal (13) and the lower node (37),
- a control circuit configured to operate the semiconductor switches (S1...S6), wherein the control circuit is configured to use a first operation mode and a second operating mode, wherein in the first operating mode the upper and lower second switches (S1, S4) remain turned on, wherein in the second operating mode, one of the second switches (S1, S4) remains turned on while the other second switch (S1, S4) remains turned off.

2. The isolated DC/DC power converter (10, 80, 90) of claim 1, wherein the circuit arrangement comprises:
- a capacitor series of two capacitors (15, 16) arranged between the primary side DC terminals (12, 13) of the power converter (10),
- a diode series of two diodes (41, 42) connected between the upper and lower node (36, 37), wherein the midpoint of the diode series is connected to the midpoint of the capacitor series.

3. The isolated DC/DC power converter (100) of claim 1, wherein the circuit ar-rangement comprises a capacitor (101) connected between the upper and lower node (36, 37).

4. The isolated DC/DC power converter (10, 80, 90, 100) of any of the preceding claims, wherein the rectifier circuit (60) is a diode bridge (60).

5. The isolated DC/DC power converter (10, 80, 90, 100) of claims 1 to 3, wherein the rectifier circuit (60) is an active rectifier.

6. The isolated DC/DC power converter (10, 80, 90, 100) of any of the preceding claims, configured to operate the semiconductor switches (S2, S3, S5, S6) of the full bridge (30) to convert a DC voltage at the upper and lower node (36, 37) to an AC voltage at the primary side of the transformer (55) and to operate at a first switch-ing frequency of at least 1 kHz.

7. The isolated DC/DC power converter (10, 80, 90, 100) of any of the preceding claims, configured to, in the second operating mode, switching the state of the sec-ond switches (S1, S4) with a second switching frequency substantially lower than the first switching frequency, particularly less than 1 kHz.

8. The isolated DC/DC power converter (10, 80, 90, 100) of any of the preceding claims, configured to, in the second operating mode, switching the state of the sec-ond switches (S1, S4) to maintain the capacitors (15, 16) of the capacitor series at a substantially equal voltage.

9. The isolated DC/DC power converter (10, 80, 90, 100) of any of the preceding claims, wherein the control circuit is configured to select the operating mode based on the input voltage and output voltage at the primary side and secondary side DC terminals (12, 13, 72, 73), particularly based on a comparison between the ratios of input and output voltage for both operating modes with the turn ratio of the trans-former (55).

10. The isolated DC/DC power converter (80) of any of the preceding claims, where-in
- the capacitor series comprises three capacitors (81...83) with an upper midpoint (84) between the upper two capacitors (81, 82) and a lower midpoint (85) between the lower two capacitors (82, 83),
- an upper third semiconductor switch (S7) is connected between the upper node (36) and the upper midpoint (84) and
- a lower third semiconductor switch (S8) is connected between the lower node (37) and the lower midpoint (85).

11. The isolated DC/DC power converter (90) of any of the preceding claims, where-in
- the capacitor series comprises four capacitors (91...94) with an upper midpoint (95) between the upper two capacitors (91, 92) and a lower midpoint (97) between the lower two capacitors (93, 94) and a central midpoint (96) between the central capacitors (92, 93),
- an upper fourth half-bridge (98) of two semiconductor switches is connected be-tween the upper primary side DC terminal (12) and the upper midpoint (95), the midpoint of the upper fourth half-bridge (98) being connected to a terminal of the upper second switch (S1),
- a lower fourth half-bridge (99) of two semiconductor switches is connected be-tween the lower primary side DC terminal (13) and the lower midpoint (97), the midpoint of the lower fourth half-bridge (99) being connected to a terminal of the lower second switch (S4),
- a diode series of two diodes (41, 42) is connected between the upper and lower node (36, 37), wherein the midpoint of the diode series is connected to the central midpoint (96) of the capacitor series.

12. The isolated DC/DC power converter (10, 80, 90, 100) of claim 5, wherein
- the rectifier circuit (60) is a full bridge (111), its terminals forming upper and lower secondary nodes,
- an upper secondary side semiconductor switch (121) between the upper second-ary side DC terminal (72) and the upper secondary side node,
- a lower secondary side semiconductor switch (122) between the lower secondary side DC terminal (73) and the lower secondary side node (37),
- the control circuit is configured to operate the secondary side semiconductor switches (121, 122) with the first and second operating mode.
